(19) Europäisches Patentamt
European Patent Office
Office européen des brevets

(11) EP 3 107 948 B1

(12) **EUROPÄISCHE PATENTSCHRIFT**

(45) Veröffentlichungstag und Bekanntmachung des Hinweises auf die Patenterteilung:
**09.01.2019 Patentblatt 2019/02**

(21) Anmeldenummer: **15706720.8**

(22) Anmeldetag: **13.02.2015**

(51) Int Cl.:
***C08G 18/79*** *(2006.01)* ***C08G 18/02*** *(2006.01)*
***C08G 18/20*** *(2006.01)*

(86) Internationale Anmeldenummer:
**PCT/EP2015/053087**

(87) Internationale Veröffentlichungsnummer:
**WO 2015/124504 (27.08.2015 Gazette 2015/34)**

(54) **VERFAHREN ZUR ISOCYANATMODIFIZIERUNG UNTER VERWENDUNG VON SPIROCYCLISCHEN AMMONIUMSALZEN ALS KATALYSATOR**

METHOD FOR ISOCYANATE MODIFICATION USING SPIROCYCLIC AMMONIUM SALTS AS CATALYST

PROCÉDÉ DE MODIFICATION D'ISOCYANATE À L'AIDE DE SELS D'AMMONIUM SPIROCYCLIQUES COMME CATALYSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.02.2014 EP 14155525**

(43) Veröffentlichungstag der Anmeldung:
**28.12.2016 Patentblatt 2016/52**

(73) Patentinhaber: **Covestro Deutschland AG**
**51373 Leverkusen (DE)**

(72) Erfinder: **RICHTER, Frank**
**51373 Leverkusen (DE)**

(74) Vertreter: **Levpat**
**c/o Covestro AG**
**Gebäude 4825**
**51365 Leverkusen (DE)**

(56) Entgegenhaltungen:
**US-A1- 2007 049 750**

- **LAAS H J ET AL: "ZUR SYNTHESE ALIPHATISCHER POLYISOCYANATE-LACKPOLYISOCYANATE MIT BIURET-, ISOCYANURAT- ODER URETDIONSTRUKTUR. ÖTHE SYNTHESIS OF ALIPHATIC POLYISOCYANATES CONTAINING BIURET, ISOCYANURATE OR URETDIONE BACKBONES FOR USE IN COATINGS", JOURNAL FUER PRAKTISCHE CHEMIE, WILEY VCH, WEINHEIM, DE, Bd. 336, Nr. 3, 1. Januar 1994 (1994-01-01), Seiten 185-200, XP000441642, ISSN: 1436-9966, DOI: 10.1002/PRAC.19943360302**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 107 948 B1

## Beschreibung

Die Erfindung betrifft ein Verfahren zur Modifizierung von Isocyanaten, bei dem mindestens ein monomeres organisches Isocyanat mit einer NCO-Funktionalität > 1 in Gegenwart mindestens eines Katalysators oligomerisiert wird, sowie die Verwendung eines derartigen Katalysators.

Die Oligo- bzw. Polymerisierung von Isocyanaten insbesondere unter Bildung von höhermolekularen Oligomerengemischen mit Uredion- ("Dimer"), Isocyanurat- ("Trimer") und/oder Iminooxadiazindionstrukturen ("asymmetrisches Trimer") im Molekülgerüst, hier zusammenfassend Isocyanatmodifizierung genannt, ist seit langem bekannt. Enthalten die modifizierten Polyisocyanate freie NCO-Gruppen, die ggf. auch mit Blockierungsmitteln vorübergehend desaktiviert worden sein können, sind sie außerordentlich hochwertige Ausgangsstoffe für die Herstellung einer Vielzahl von Polyurethan-Kunststoffen und Beschichtungsmitteln.

Es haben sich eine Reihe technischer Verfahren zur Isocyanatmodifizierung etabliert, wobei man in der Regel das zu modifizierende Isocyanat, meist ein Diisocyanat, durch Zusatz von Katalysatoren umsetzt und diese anschließend, wenn der gewünschte Umsatzgrad des zu modifizierenden Isocyanates erreicht ist, durch geeignete Maßnahmen unwirksam macht (deaktiviert) und das erhaltene Polyisocyanat in der Regel vom nicht umgesetzten Monomer abtrennt. Eine Zusammenstellung dieser Verfahren des Standes der Technik findet sich in H. J. Laas et al., J. Prakt. Chem. 1994, 336, 185 ff.

Als Modifizierungskatalysatoren haben sich Neutralbasen und ionisch aufgebaute Verbindungen bewährt. Letztere können meist in sehr geringer Menge eingesetzt werden und führen äußerst schnell zum gewünschten Ergebnis. Bei den Neutralbasen ist das abhängig vom umzusetzenden Monomer und verwendeter Neutralbase nicht immer so, Struktur-Wirkungs- bzw. - Aktiviätsbeziehungen abzuleiten ist allerdings nahezu unmöglich (vgl. Chem. Eur. J. 2009, 15, 5200 - 5202).

Die Möglichkeit, als Kation zum gegenüber Isocyanaten katalytisch aktiven Anion wie Hydroxid, Alkanoat, Alkoxylat etc. auch Tetraorganylammonium oder -phosphonium zu verwenden, ist allgemein bekannt, wenngleich in der Regel nicht explizit als besonders bevorzugt herausgehoben, vgl.: H. J. Laas et al., J. Prakt. Chem. 1994, 336, 185 ff.

Weiterhin ist die Verwendung von Fluoriden und Hydrogenpolyfluoriden, letztere sind stabile Addukte von HF an Fluorid-Ionen enthaltenden Verbindungen, optional auch in Form ihrer Ammonium- oder Phosphoniumsalze, für die Isocyanatmodifizierung unter anderem bekannt aus EP 962 455 A1, EP 962 454 A1, EP 896 009 A1, EP 798 299 A1, EP 447 074 A1, EP 379 914 A1, EP 339 396 A1, EP 315 692 A1, EP 295 926 A1 sowie EP 235 388 A1.

Allerdings weisen die Tetraorganylammonium und -phosphonium (Hydrogenpoly)fluoride des Standes der Technik bei der Durchführung der Modifizierungsreaktion oftmals den Nachteil auf, dass bei ihrer Verwendung die Reaktion mitunter nur durch kontinuierliche Katatalysatordosierung aufrecht zu erhalten ist, d.h. dass die Zersetzung des Katalysators im Isocyanatmilieu im Vergleich zur Modifizierungsreaktion technisch unakzeptabel schnell abläuft.

Hinzu kommt, dass beim Einsatz von Tetraorganylammonium(hydrogen)polyfluoriden mitunter ein untypischer Reaktionsverlauf zu beobachten ist, der zu Produkten mit deutlich niedrigerem Iminooxadiazindiongruppenanteil führt, als bei regulärem Verlauf der Wärmeproduktionsrate (vgl. EP 962 455 A1). Dieser Nachteil wurde nach der Lehre der EP 962 455 A1 durch den Einsatz von Phosphoniumsalzen eliminiert, allerdings weisen letztere - insbesondere bei höheren Reaktionstemperaturen - die weiter oben erwähnte, unakzeptabel hohe Zersetzungstendenz auf, wobei die Zersetzungsprodukte einen nachteiligen Einfluß auf die Prozess- und Produktstabilität haben können.

EP 2 415 795 A1 beschreibt sehr stabile Tetraorganylphosphonium (Hydrogenpoly)fluoride, die diese Nachteile nicht aufweisen, allerdings kommerziell nicht verfügbar und nur aufwendig herzustellen sind.

Der Erfindung lag die Aufgabe zugrunde, ein verbessertes Verfahren zur Isocyanatmodifizierung zur Verfügung zu stellen, bei dem kommerziell gut zugängliche oder aus preiswerten Edukten leicht herstellbare Verbindungen als Katalysatoren eingesetzt werden, die eine hohe katalytische Aktivität und Selektivität bei gleichzeitig guter Katalysatorstabilität aufweisen.

Diese Aufgabe wird gelöst durch ein Verfahren zur Modifizierung von Isocyanaten, bei dem mindestens ein monomeres organisches Isocyanat mit einer NCO-Funktionalität > 1 in Gegenwart mindestens eines Katalysators oligomerisiert wird, wobei das Verfahren dadurch gekennzeichnet ist, dass der Katalysator mindestens ein spirocyclisches Ammoniumsalz mit einem Kation der Formel I als Katalysatoren für die Isocyanatmodifizierung umfasst,

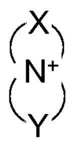

(Formel I),

wobei die N-ständigen Substituenten X und Y für gleiche oder verschiedene, substituierte oder unsubstituierte, ggf. durch Heteroatome (O, N, S) sowie aromatische Ringe unterbrochene $C_2$-$C_{20}$-Alkylenketten stehen.

Verbindungen dieses Strukturtyps sind in einfacher Weise nach literaturbekannten Methoden (z.B. US 2007/0049750 und darin zit. Literatur) beispielsweise durch Umsetzung von sekundären cyclischen Aminen mit geeignet substituierten Dihalogenalkanen, ggf. in Gegenwart eines Halogenwasserstofffängers, und anschließendem Anionenaustausch zugänglich.

Erfindungsgemäß können X und Y in Formel I unabhängig voneinander für ggf. substituierte Alkylengruppen stehen, wobei $C_4$-$C_6$- Alkylenketten insbesondere in beiden N-zentrierten Ringen bevorzugt sind. Die $C_4$-$C_6$- Alkylenketten sind dabei vorzugsweise linear aufgebaut. Diese sind z.B. in einfacher Weise durch Reaktion von ggf. C-substituierten Pyrrolidinen, Piperidinen und Azepanen (1H-Hexahydroazepinen) mit 1,4-Dihalogenbutan, 1,5-Dihalogenpentan oder 1,6-Dihalogenhexan sowie derer C-substituierter Derivate zugänglich, wobei Halogen für Cl, Br und I, bevorzugt Cl, steht.

Weiterhin sind beispielsweise durch analoge Umsetzung von ggf. C-substituierten Oxazolidinen, Isoxazolidinen, Oxazinanen, Morpholinen und Oxazepanen sowie den Analoga der vorstehend genannten N-O-Heterocyclen, die S statt O enthalten, weiterhin Imidazolidinen, Pyrazolidinen, Piperazinen und strukturell verwandten Verbindungen mit o.g. Dihalogenalkanen auch Vertreter zugänglich, die in einem der Segmente X oder Y der allg. Formel I durch Heteroatome unterbrochene C-Ketten aufweisen. Bei den 2 oder mehr Stickstoffatome enthaltenden Spezies besteht darüber hinaus die Möglichkeit, durch entsprechende Variation der Reaktionsbedingungen auch Salze mit zwei- bzw. mehrfach geladenem Kation zu erzeugen oder durch vorherige geeignete Substitution des bzw. der N-Atome zu einfach positiv geladenen Kationen der Formel I zu gelangen in denen sich ein bzw. mehrere exocyclische(r) Alkylsubstituent(en) an dem bzw. den dreibindigen N-Atom(en) des Ringes X bzw Y befindet bzw. befinden.

Natürlich lässt sich auch durch geeignete Wahl des Alkylierungsmittels eine strukturelle Variation in das Ringsegment X oder Y einbringen, beispielhaft seien Reaktionen von Bis(2-halogenethyl)ethern mit den o.g. sekundären, cyclischen Aminen genannt.

Beispiele solcher Synthesen sind beispielsweise in US 2007/0049750 A1 beschrieben, deren Inhalt hiermit vollumfänglich als in die vorliegende Anmeldung aufgenommen gilt, insbesondere hinsichtlich der Abschnitte [0015] bis [0039] dieser Druckschrift.

Als Anionen können bei den Verbindungen der Formel I prinzipiell alle Spezies zum Einsatz kommen, insbesondere solche, die als katalytisch aktiv gegenüber Isocyanaten bekannt sind, wie beispielsweise Hydroxid, Alkanoat, Carboxylat, Heterocyclen mit mindestens einem negativ geladenen Stickstoffatom im Ring wie Azolat, Imidazolat, Triazolat, Tetrazolat, Fluorid, Hydrogendifluorid und höhere Polyfluoride (Addukte von mehr als einem Äquivalent HF an Fluorid-Ionen enthaltenden Verbindungen), wobei die Fluoride, Hydrogendifluoride und höheren Polyfluoride erfindungsgemäß zu Produkten mit hohem Iminooxadiazindiongruppengehalt führen.

Die erfindungsgemäßen Katalysatoren können einzelnen oder in beliebigen Mischungen untereinander verwendet werden.

Mit dem erfindungsgemäßen Modifizierverfahren ist eine Vielzahl qualitativ hochwertiger und deshalb für den Polyurethansektor sehr wertvoller Polyisocyanate in einfacher Weise zugänglich. Abhängig vom verwendeten Ausgangs(di)isocyanat und den Reaktionsbedingungen entstehen beim erfindungsgemäßen Verfahren Polyisocyanate vom sog. Isocyanat-Trimertyp (d.h. enthaltend Isocyanurat- und/oder Iminooxadiazindionstrukturen) mit geringem Anteil an Uretdiongruppen ("Isocyanat-Dimere"). Bei steigender Reaktionstemperatur steigt der Anteil letzterer in den Verfahrensprodukten in der Regel an, allerdings ist dieser Effekt weit weniger ausgeprägt, als bei Verwendung von Phosphoniumsalzen mit identischem Anion.

Bei dem erfindungsgemäßen Verfahren kann weiter vorgesehen sein, dass die Oligomerisierung unter Anwesenheit eines Lösungsmittels und/ oder Additivs durchgeführt wird.

Zur Durchführung des erfindungsgemäßen Verfahrens können prinzipiell alle bekannten monomeren Mono-, Di- oder Polyisocyanate des Standes der Technik einzeln oder in beliebigen Mischungen untereinander eingesetzt werden. Beispielhaft seien genannt: Hexamethylendiisocyanat (HDI), 2-Methylpentan-1,5-diisocyanat, 2,4,4-Trimethyl-1,6-hexandiisocyanat, 2,2,4-Trimethyl-1,6-hexandiisocyanat, 4-Isocyanatomethyl-1,8-octandiisocyanat, 3(4)-Isocyanatomethyl-1-methylcyclohexylisocyanat (IMCI), Isophorondiisocyanat (IPDI), 1,3- sowie 1,4-Bis(isocyanatomethyl)benzen (XDI), 1,3- sowie 1,4-Bis(isocyanatomethyl)cyclohexan (H6XDI), 2,4- sowie 2,6-Toluylendiisocyanat (TDI), Bis(4-isocyanatophenyl)methan (4,4'MDI), 4-Isocyanatophenyl-2-isocyanatophenylmethan (2,4'MDI) sowie mehrkernige Produkte, die durch Formaldehyd-Anilin-Polykondensation und anschließende Überführung der resultierenden (Po-ly)amine in die entsprechenden (Poly)isocyanate zugänglich sind (Polymer-MDI).

Bevorzugt sind monomere aliphatische Diisocyanate. d.h. Diisocyanate bei denen beide NCO-Gruppen an ein $sp^3$-hybridisiertes Kohlenstoffatom gebunden sind. Besonders bevorzugt sind Hexamethylendiisocyanat (HDI), 2-Methylpentan-1,5-diisocyanat, 2,4,4-Trimethyl-1,6-hexandiisocyanat, 2,2,4-Trimethyl-1,6-hexandiisocyanat, 4-Isocyanatomethyl-1,8-octandiisocyanat, 3(4)-Isocyanatomethyl-1-methylcyclohexylisocyanat (IMCI), Isophorondiisocyanat (IPDI), 1,3- sowie 1,4-Bis(isocyanatomethyl)benzen (XDI), 1,3- sowie 1,4-Bis(isocyanatomethyl)cyclohexan (H6XDI).

Für die vorliegende Erfindung können sämtliche der vorgenannten Isocyanate eingesetzt werden, unabhängig davon, nach welchen Verfahren diese hergestellt wurden, also ob sie beispielsweise mit oder ohne Verwendung von Phosgen erzeugt wurden.

Die Menge des im erfindungsgemäßen Verfahren einzusetzenden Katalysators richtet sich in erster Linie nach dem verwendeten Isocyanat und der angestrebten Reaktionsgeschwindigkeit und liegt vorzugsweise bei 0,001 bis 5 mol-%, bezogen auf die Summe der Stoffmengen des eingesetzten monomeren Isocyanates und des Katalysators. Weiter bevorzugt werden 0,002 bis 2 mol-% Katalysator eingesetzt.

Der Katalysator kann im erfindungsgemäßen Verfahren unverdünnt oder in Lösungsmitteln gelöst eingesetzt werden. Als Lösungsmittel kommen dabei alle Verbindungen in Frage, die nicht mit dem Katalysator reagieren und ihn in ausreichendem Maße zu lösen vermögen, z.B. aliphatische oder aromatische Kohlenwasserstoffe, Alkohole, Ketone, Ester sowie Ether. Bevorzugt werden Alkohole verwendet.

Das erfindungsgemäße Verfahren kann im Temperaturbereich von 0 °C bis + 250 °C, bevorzugt 20 bis 180 °C, besonders bevorzugt 40 bis 150 °C erfolgen und bei beliebigen Umsetzungsgraden, bevorzugt nachdem 5 bis 80 %, besonders bevorzugt 10 bis 60 %, des eingesetzten monomeren Isocyanates umgesetzt wurden, unterbrochen werden.

Zur Katalysatordeaktivierung bieten sich prinzipiell eine ganze Reihe vorbeschriebener Methoden des Standes der Technik an, wie z.B. die Zugabe (unter- oder über-) stöchiometrischer Mengen an starken Säuren oder Säurederivaten (z.B. Benzoylchlorid, saure Ester Phosphor oder Schwefel enthaltender Säuren, diese Säuren selbst etc., nicht jedoch HF), adsorptive Bindung des Katalysators und anschließende Abtrennung durch Filtration und andere dem Fachmann bekannte Methoden.

Im Gegensatz zur Katalyse durch Ammoniumsalze in denen das ladungstragende Stickstoffatom nicht Teil eines spirocyclischen Ringsystemes ist, beobachtet man bei Einsatz der erfindungsgemäßen Katalysatoren mit Fluorid- bzw. Oligo/Polyfluoridanionen überraschenderweise keinerlei Anomalien in der Wärmeproduktionsrate und immer einen gleichmäßigen Reaktionsverlauf der zu qualitativ hochwertigen Produkten mit für die jeweiligen Reaktionsbedingungen optimalem Iminooxadiazindiogruppengehalt führt.

Ganz allgemein sind die erfindungsgemäßen Katalysatoren unabhängig vom Anion, das für die katalytische Aktivität und Selektivität verantwortlich ist, im Isocyanatmedium wesentlich stabiler als die literaturbekannten Derivate des Standes der Technik.

Nach einer besonderen, kontinuierlich arbeitenden Ausführungsform des erfindungsgemäßen Verfahrens kann die Oligomerisierung in einem Rohrreaktor vorgenommen werden.

Die nach dem erfindungsgemäßen Verfahren erhältlichen Produkte bzw. Produktgemische stellen mithin vielseitig verwendbare Ausgangsmaterialien zur Herstellung von, ggf. geschäumte(n), Kunststoffe(n) sowie Lacken, Beschichtungsmitteln, Klebstoffen und Zuschlagstoffen dar. Insbesondere zur Herstellung von, ggf. wasserdipergierbaren Ein- und Zweikomponenten-Polyurethanlacken eignen sie sich, ggf. in NCO-blockierter Form, aufgrund ihrer im Vergleich zu (überwiegend) Isocyanurat-Polyisocyanat basierenden Produkten verringerten Lösungs- sowie Schmelzviskosität bei ansonsten gleich hohem bzw. verbessertem Eigenschaftsprofil. So sind die erfindungsgemäßen Verfahrensprodukte auf HDI-Basis auch in hoher Verdünnung in Lacklösungsmitteln stabiler gegen das Auftreten von Ausflockungen bzw. Trübungen, als entsprechende Produkte des Standes der Technik.

Die erfindungsgemäßen Verfahrensprodukte können als solche oder in Verbindung mit anderen Isocyanatderivaten des Standes der Technik, wie z.B. Uretdion-, Biuret-, Allophanat-, Isocyanurat- und/oder Urethan-Gruppen enthaltenden Polyisocyanaten, deren freie NCO-Gruppen ggf. mit Blockierungsmitteln desaktiviert wurden, eingesetzt werden.

Ein weiterer Gegenstand der vorliegenden Erfindung ist gerichtet auf die Verwendung eines spirocyclischen Ammoniumsalzes mit einem Kation der Formel I,

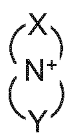

(Formel I),

wobei die N-ständigen Substituenten X und Y für gleiche oder verschiedene, substituierte oder unsubstituierte, ggf. durch Heteroatome (O, N, S) sowie aromatische Ringe unterbrochene $C_2$-$C_{20}$-Alkylenketten stehen, als Katalysatoren für die Oligomerisierung von monomeren organischen Isocyanaten mit einer NCO-Funktionalität > 1.

Die vorliegende Erfindung wird im Folgenden anhand von Beispielen und Vergleichsbeispielen näher erläutert, ohne sie jedoch auf diese einzuschränken.

**Beispiele:**

Alle Prozentangaben sind, soweit nicht anders vermerkt, als Gewichtsprozent zu verstehen.

Mol-% Angaben wurden NMR-spektroskopisch ermittelt und beziehen sich immer, so nicht anders ausgewiesen, auf die Summe der NCO-Folgeprodukte. Die Messungen erfolgten auf den Geräten DPX 400 bzw. DRX 700 der Fa. Brucker an ca. 5 %igen ($^1$H-NMR) bzw. ca. 50 %igen ($^{13}$C-NMR) Proben in trockenem $C_6D_6$ bei einer Frequenz von 400 bzw. 700 MHz ($^1$H-NMR) oder 100 bzw. 176 MHz ($^{13}$C-NMR). Als Referenz für die ppm-Skale wurden geringe Mengen von Tetramethylsilan im Lösungsmittel mit 0 ppm $^1$H-NMR-chem. Verschiebung heran gezogen. Alternativ wurde auf das Signal des im Lösungsmittel enthaltenen $C_6D_5H$ referenziert: 7,15 ppm $^1$H-NMR-chem. Verschiebung, 128,02 ppm $^{13}$C-NMR-chem. Verschiebung.. Daten für die chemische Verschiebung der in Frage kommenden Verbindungen wurden der Literatur entnommen (vgl. D. Wendisch, H. Reiff und D. Dieterich, Die Angewandte Makromolekulare Chemie 141, 1986, 173-183 und darin zit. Lit sowie EP-A 896 009.

Die dynamischen Viskositäten wurden bei 23 °C mit dem Viskosimeter VT 550 der Fa. Haake bestimmt. Durch Messungen bei unterschiedlichen Schergeschwindigkeiten wurde sichergestellt, daß das Fließverhalten der beschriebenen erfindungsgemäßen Polyisocyanatmischungen wie auch das der Vergleichsprodukte dem idealer Newtonscher Flüssigkeiten entspricht. Die Angabe der Schergeschwindigkeit kann deshalb entfallen.

Die Bestimmung der Restmonomergehalte erfolgte gaschromatographisch.

Alle Reaktionen wurden, wenn nicht anders angegeben, unter einer Stickstoffatmosphäre durchgeführt.

Die verwendeten Diisocyanate sind Produkte der Bayer MaterialScience AG, D-51368 Leverkusen, alle anderen kommerziell zugänglichen Chemikalien wurden von der Fa. Aldrich, D-82018 Taufkirchen, bezogen.

Die nicht kommerziell erhältlichen Katalysatoren wurden nach literaturbekannten Methoden gewonnen, wie in US 2007/0049750 und der darin zitierten Literatur beschrieben.

**Beispiel 1 Katalysatorherstellung**

**5-Azonia-spiro[4.5]decansalze**

85,2 g (1 mol) Piperidin, 127,0 g (1 mol) 1,4-Dichlorbutan und 138,21 g (1 mol) Kaliumcarbonat wurden in 700 ml 2-Propanol vorgelegt und 12 h am Rückfluß erhitzt. Die erhaltene Reaktionsmischung wurde nach Erkalten filtriert, der Filterrückstand dreimal mit ca. 100 ml warmem 2-Propanol gewaschen und die vereinigten Filtrate auf ca. 650 g eingeengt. Zu jeweils ca. 100 g dieser Lösung (argentometrisch bestimmter Chloridgehalt: 5,3 %) wurden

a) ca. 50 g einer gesättigten Kaliumhydroxidlösung in Methanol,
b) ca. 250 g einer gesättigten Kaliumfluoridlösung in Methanol,
c) ca. 70 g einer gesättigten Kaliumacetatlösung in Methanol bzw.
d) ca. 120 g einer ca. 20%igen Kaliumpivalatlösung in Methanol

tropfenweise bei Zimmertemperatur gegeben, 24 h gerührt und filtriert. Der Filterrückstand wurde dreimal mit ca. 50 ml 2-Propanol gewaschen, wobei nach jedem Waschen im Vakuum bei Zimmertemperatur auf ca. 1/3 des Ausgangsvolumens eingeengt wurde, um Methanol weitgehend zu entfernen und Reste anorganischer Salze auszufällen. Anschließend wurde erneut filtriert und mit jeweils ca. 10 ml 2-Propanol gewaschen und aufkonzentriert wie vorher. Die vereinigten Filtrate wurden schließlich im Vakuum auf ca. 80 (b) bzw. ca. 160 g eingeengt (a, c und d) und analysiert.

a) $OH^-$ - Gehalt (titrimetrisch gg. 0,1 N HCl, Indikator Phenolphthalein): 1,5 %
b) $F^-$ - Gehalt (ionensensitive Elektrode): 3,7 %.
c) $CH_3C(O)O^-$ - Gehalt (titrim. gg. 0,1 N HCl, Indikator Bromphenolblau): 5,4 %
d) $(CH_3)_3CC(O)O^-$ - Gehalt (titrim. gg. 0,1 N HCl, Indikator Bromphenolblau): 9,3 %.

Katalysatorlösung 1b wurde anschließend mit 3 g wasserfreier HF zur Überführung in das Difluorid versetzt (Katalysatorlösung 1e). Weitere Katalysatoren wurden nach analogem Verfahren aus dem jeweiligen sekundären, cyclischen Amin und dem entsprechenden alpha-omega-Dichloralkan gewonnen. Anschließend wurde die optimale Katalysatorkonzentration für die HDI-Trimerisierung in orientierenden Vorversuchen bei 60°C (vgl. Bsp. 2) ermittelt und die Konzentration der Katalysatorlösung durch Verdünnen mit 2-Propanol so eingestellt, dass keine bzw. nur geringe Gelteilchenbildung bei der Zugabe der Katalysatorlösung zum HDI zu beobachten war. Eine Übersicht hierzu findet sich in Tabelle 1.

Tabelle 1

| Beispiel | Kation | Anion | Lösemittel | Konzentration [%] |
|---|---|---|---|---|
| 1a | 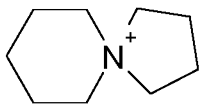 | $OH^-$ | 2-PrOH | 1 |
| 1c | 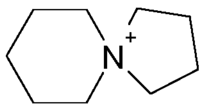 | $CH_3C(O)O^-$ | 2-PrOH | 5 |
| 1d | 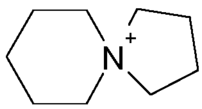 | $(CH_3)_3CC(O)O^-$ | 2-PrOH | 10 |
| 1e | 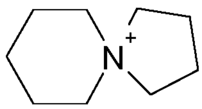 | $[HF_2]^-$ | 2-PrOH | 30 |
| 2 | 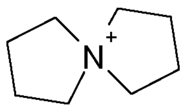 | $[HF_2]^-$ | 2-PrOH | 30 |
| 3 | 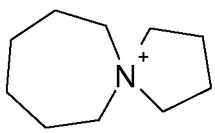 | $[HF_2]^-$ | 2-PrOH | 30 |
| 4 | 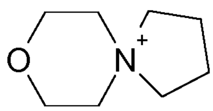 | $[HF_2]^-$ | 2-PrOH | 5 |
| 5 | 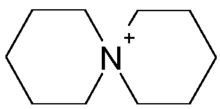 | $[HF_2]^-$ | 2-PrOH | 25 |
| 6 | 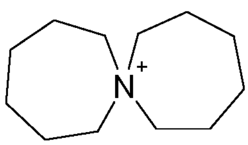 | $[HF_2]^-$ | 2-PrOH | 20 |

**Beispiel 2**

In einem doppelwandigen, durch einen externen Kreislauf auf die jeweils gewünschte Starttemperatur temperierten Planschliffgefäß mit Rührer, an eine Inertgasanlage (Stickstoff/Vakuum) angeschlossenem Rückflusskühler und Thermometer wurden 1000 g HDI vorgelegt und durch einstündiges Rühren im Vakuum (< 1 mbar) von gelösten Gasen befreit. Nach Belüften mit Stickstoff wurde die in Tabelle 2 angegebene Katalysatormenge so dosiert, dass die in Tabelle 2 angegebene Maximaltemperatur nicht überschritten wurde. Nachdem ca. 1 mol NCO Gruppen umgesetzt waren, indiziert durch Erreichen eines Brechungsindex' (gemessen bei 20°C; $n_D^{20}$) zwischen 1,4600 und 1,4620, wurde der Katalysator durch Zugabe einer zum Katalysator äquivalenten Menge der in Tabelle 2 angegebenen Stopperlösung deaktiviert, weitere 30 min bei Reaktionstemperatur nachgerührt und anschließend aufgearbeitet.

Die Zeit zwischen erster Katalysatorzugabe und Zugabe der Stopperlösung wurde zur Berechnung der in Tabelle 2 angegebenen Turnover Frequenz (TOF) herangezogen, definiert als Quotient aus der Stoffmenge der in der

Oligomerisierung umgesetzten NCO-Gruppen A und des Produktes der Stoffmenge an dafür nötigem Katalysator B und der Reaktionszeit t (gemessen in Sekunden) gemäß folgender Gleichung:

$$TOF = A*(B*t)^{-1}\ [mol*(mol*sec)^{-1}].$$

Es wurden zum Teil mehrere Versuche bei gleicher Reaktionstemperatur durchgeführt, wobei im jeweils ersten Versuch der Katalysator langsamer und z.T. auch portionsweise dosiert wurde, um die optimale Menge für den Nachfolgeversuch zu ermitteln. Bei diesem wurde der Katalysator zügiger dosiert bzw. es wurde bereits nach Zugabe von weniger Katalysator und/oder nach kürzerer Zeit der Zielumsatz erreicht, was zu höheren TOF-Werten führt.

Die Aufarbeitung erfolgte durch Vakuumdestillation in einem Dünnschichtverdampfer, Typ Kurzwegverdampfer (KWV), mit vorgeschaltetem Vorverdampfer (VV) (Destillationsdaten: Druck: 0,08 +/- 0,04 mbar, VV-Temperatur: 120°C, HV-Temp.: 140°C), wobei nicht umgesetztes Monomer als Destillat und das monomerenarme Polyisocyanatharz als Sumpfprodukt separiert wurden (Startdurchlauf). Das Polyisocyanatharz wurde separiert und das Destillat in einer zweiten Planschliff-Rührapparatur, die identisch zur ersten aufgebaut ist, gesammelt und mit frisch entgastem HDI auf die Ausgangsmenge (1000 g) aufgefüllt. Anschließend wurde erneut katalysiert und verfahren wie eingangs beschrieben. Diese Verfahrensweise wurde unter Variation der Reaktionstemperatur mehrmals wiederholt (Versuche A, B, C, ...). Die Ergebnisse sind Tabelle 2 zu entnehmen.

Abschließend wurde die Destillatzusammensetzung gaschromatografisch ermittelt. In keinem Fall konnten Zersetzungsprodukte des Katalysatorkations detektiert werden (Nachweisgrenze ca. 2 ppm).

Tabelle 2: Stopperlösungen: 1: Dibutylphosphat, 2: Toluolsulfonsäure, 40%ig in 2-PrOH, 3: Dodecylbenzolsufonsäure, 70%ig in 2-PrOH

| Beispiel-Nr. | | Katalysatorlsg. [g] | Reaktionstemperatur von - bis [°C] | | Stopper | TOF |
|---|---|---|---|---|---|---|
| 2a- | A | 1a, [8,2] | 60 | 69 | 1 | 1,1 |
| 2a- | B | 1a, [6,2] | 60 | 63 | 1 | 2,5 |
| 2a- | C | 1a, [7,0] | 80 | 82 | 1 | 1,5 |
| 2a- | D | 1a, [7,2] | 80 | 81 | 1 | 2,4 |
| 2a- | E | 1a, [6,4] | 100 | 102 | 1 | 1,6 |
| 2a- | F | 1a, [6,1] | 100 | 101 | 1 | 2,8 |
| 2b- | A | 1e, [0,25] | 60 | 60 | 3 | 0,3 |
| 2b- | B | 1e, [0,19] | 60 | 60 | 3 | 0,5 |
| 2b- | C | 1e, [0,22] | 80 | 81 | 3 | 0,8 |
| 2b- | D | 1e, [0,24] | 80 | 82 | 3 | 1,1 |
| 2b- | E | 1e, [0,24] | 100 | 104 | 3 | 1,8 |
| 2b- | F | 1e, [0,25] | 100 | 100 | 3 | 2,1 |
| 2b- | G | 1e, [0,27] | 120 | 130 | 3 | 3,7 |
| 2b- | H | 1e, [0,28] | 120 | 121 | 3 | 4,2 |
| 2b- | I | 1e, [0,40] | 140 | 154 | 3 | 2,4 |
| 2b- | J | 1e, [0,33] | 140 | 154 | 3 | 3,2 |
| 2c- | A | 1c, [2,2] | 60 | 63 | 1 | 0,3 |
| 2c- | B | 1c, [2,0] | 60 | 61 | 1 | 0,3 |
| 2c- | C | 1c, [1,6] | 80 | 82 | 1 | 0,4 |
| 2c- | D | 1c, [1,4] | 80 | 81 | 1 | 0,7 |
| 2c- | E | 1c, [1,5] | 100 | 103 | 1 | 3,5 |
| 2c- | F | 1c, [1,6] | 100 | 103 | 1 | 3,9 |

(fortgesetzt)

| Beispiel-Nr. | | Katalysatorlsg. [g] | Reaktionstemperatur von - bis [°C] | | Stopper | TOF |
|---|---|---|---|---|---|---|
| 2d- | A | 1d, [1,9] | 60 | 63 | 1 | 0,3 |
| 2d- | B | 1d, [1,7] | 60 | 62 | 1 | 0,6 |
| 2d- | C | 1d, [1,2] | 80 | 82 | 1 | 0,8 |
| 2d- | D | 1d, [1,1] | 80 | 81 | 1 | 0,9 |
| 2d- | E | 1d, [1,0] | 100 | 101 | 1 | 2,5 |
| 2d- | F | 1d, [0,9] | 100 | 102 | 1 | 3,3 |
| 2e- | A | 2, [0,41] | 60 | 64 | 2 | 0,9 |
| 2e- | B | 2, [0,39] | 60 | 62 | 2 | 1,2 |
| 2e- | C | 2, [0,34] | 80 | 85 | 2 | 1,4 |
| 2e- | D | 2, [0,32] | 80 | 81 | 2 | 1,8 |
| 2e- | E | 2, [0,28] | 100 | 103 | 2 | 2,1 |
| 2e- | F | 2, [0,26] | 100 | 102 | 2 | 2,9 |
| 2f- | A | 3, [0,48] | 60 | 64 | 2 | 1,0 |
| 2f- | B | 3, [0,46] | 60 | 64 | 2 | 1,2 |
| 2f- | C | 3, [0,42] | 80 | 81 | 2 | 1,4 |
| 2f- | D | 3, [0,42] | 80 | 82 | 2 | 1,8 |
| 2f- | E | 3, [0,40] | 100 | 102 | 2 | 2,1 |
| 2f- | F | 3, [0,39] | 100 | 102 | 2 | 2,5 |
| 2g- | A | 4, [2,1] | 60 | 65 | 2 | 1,3 |
| 2g- | B | 4, [2,0] | 60 | 63 | 2 | 2,9 |
| 2g- | C | 4, [1,72] | 80 | 88 | 2 | 2,9 |
| 2g- | D | 4, [1,68] | 80 | 85 | 2 | 3,8 |
| 2g- | E | 4, [1,52] | 100 | 110 | 2 | 3,9 |
| 2g- | F | 4, [1,49] | 100 | 105 | 2 | 4,2 |
| 2h- | A | 5, [0,57] | 60 | 64 | 3 | 1,1 |
| 2h- | B | 5, [0,56] | 60 | 64 | 3 | 1,3 |
| 2h- | C | 5, [0,45] | 80 | 81 | 3 | 1,8 |
| 2h- | D | 5, [0,42] | 80 | 82 | 3 | 2,0 |
| 2h- | E | 5, [0,42] | 100 | 102 | 3 | 2,2 |
| 2h- | F | 5, [0,37] | 100 | 102 | 3 | 2,5 |
| 2i- | A | 6, [0,82] | 60 | 61 | 3 | 1,0 |
| 2i- | B | 6, [0,80] | 60 | 62 | 3 | 1,0 |
| 2i- | C | 6, [0,78] | 80 | 80 | 3 | 1,5 |
| 2i- | D | 6, [0,77] | 80 | 81 | 3 | 1,6 |
| 2i- | E | 6, [0,75] | 100 | 102 | 3 | 1,8 |
| 2i- | F | 6, [0,54] | 100 | 101 | 3 | 2,0 |

Bei den erhaltenen Harzen handelte sich ausnahmslos um farbhelle, klare, viskose Flüssigkeiten ohne wahrnehmbaren Amingeruch. Bei Einsatz der Fluor-haltigen Katalysatoren resultierten Gemische aus Isocyanurat und Iminooxadiazindion neben wenig Uretdion. Der Anteil an Iminooxadiazindiongruppen hat bei einer Reaktionstemperatur um 60°C sein Maximum und fällt bei Erhöhung der Reaktionstemperatur ab. Es bilden sich dann verstärkt Isocyanurat und Uretdion, der Anteil Letzterer nimmt allerdings deutlich weniger stark als bei der Katalyse mit den entsprechenden quaternären Phophoniumsalzen gemäß EP 962 455 A1 zu.

Die Sauerstoff-enthaltenden Anionen liefern Produkte vom Isocyanurattyp wobei der als Katalysatorlösemittel eingesetzte Alkohol (hier 2-Propanol) vollständig zum Allophanat umgesetzt wird (insbes. relevant bei den aufgrund ihrer hohen Reaktivität in stärkerer Verdünnung eingesetzten Hydroxiden, Bspp. 2a-A bis -F).

**Patentansprüche**

1. Verfahren zur Modifizierung von Isocyanaten, bei dem mindestens ein monomeres organisches Isocyanat mit einer NCO-Funktionalität > 1 in Gegenwart mindestens eines Katalysators oligomerisiert wird,
**dadurch gekennzeichnet, dass**
der Katalysator mindestens ein spirocyclisches Ammoniumsalz mit einem Kation der Formel I als Katalysatoren für die Isocyanatmodifizierung umfasst,

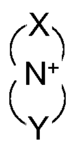

(Formel I),

wobei die N-ständigen Substituenten X und Y für gleiche oder verschiedene, substituierte oder unsubstituierte, ggf. durch Heteroatome (O, N, S) sowie aromatische Ringe unterbrochene C2-C20-Alkylenketten stehen.

2. Verfahren nach Anspruch 1, **dadurch gekennzeichnet, dass** X und/ oder Y unabhängig voneinander für ggf. substituierte C4-C6- Alkylenketten stehen und insbesondere linear aufgebaut sind.

3. Verfahren nach Anspruch 1 oder 2, **dadurch gekennzeichnet, dass** das Anion des spirocyclischen Ammoniumsalzes ausgewählt ist aus Hydroxid, Alkanoat, Carboxylat, Heterocyclen mit mindestens einem negativ geladenen Stickstoffatom im Ring, insbesondere Azolat, Imidazolat, Triazolat oder Tetrazolat, Fluorid, Hydrogendifluorid oder Mischungen von diesen.

4. Verfahren nach einem der vorstehenden Ansprüche, **dadurch gekennzeichnet, dass** die Oligomerisierung unter Anwesenheit eines Lösungsmittels und/ oder Additivs durchgeführt wird.

5. Verfahren nach einem der vorstehenden Ansprüche, **dadurch gekennzeichnet, dass** das monomere organische Isocyanat ausgewählt ist aus aliphatischen Diisocyanaten, insbesondere aus Hexamethylendiisocyanat (HDI), 2-Methylpentan-1,5-diisocyanat, 2,4,4-Trimethyl-1,6-hexandiisocyanat, 2,2,4-Trimethyl-1,6-hexandiisocyanat, 4-Isocyanatomethyl-1,8-octandiisocyanat, 3(4)-Isocyanatomethyl-1-methylcyclohexylisocyanat (IMCI), Isophorondiisocyanat (IPDI), 1,3- sowie 1,4-Bis(isocyanatomethyl)benzen (XDI), 1,3- sowie 1,4-Bis(isocyanatomethyl)cyclohexan (H6XDI) oder Mischungen von diesen.

6. Verfahren nach einem der vorstehenden Ansprüche, **dadurch gekennzeichnet, dass** der Katalysator der Formel I in einer Menge von 0,001 bis 5 mol-%, bezogen auf die Summe der Stoffmengen des eingesetzten monomeren organischen Isocyanates und des Katalysators eingesetzt wird, bevorzugt 0,002 bis 2 mol-% Katalysator.

7. Verfahren nach einem der vorstehenden Ansprüche, **dadurch gekennzeichnet, dass** das Verfahren im Temperaturbereich von 0 °C bis + 250 °C durchgeführt wird, bevorzugt 20 bis 180 °C, besonders bevorzugt 40 bis 150 °C.

8. Verfahren nach einem der vorstehenden Ansprüche, **dadurch gekennzeichnet, dass** die Oligomerisierung abgebrochen wird, nachdem 5 bis 80 Gew.-% des eingesetzten monomeren organischen Isocyanats umgesetzt sind, bevorzugt 10 bis 60 Gew.-%.

**9.** Verfahren nach Anspruch 8, **dadurch gekennzeichnet, dass** die Oligomerisierung abgebrochen wird, indem der Katalysator desaktiviert wird, insbesondere durch Zugabe einer Säure oder eines Säurederivates wie Benzoylchlorid, eines sauren Esters Phosphor oder Schwefel enthaltender Säuren, diese Säuren selbst, adsorptive Bindung des Katalysators und anschließende Abtrennung durch Filtration oder Kombinationen hiervon.

**10.** Verfahren nach Anspruch 8 oder 9, **dadurch gekennzeichnet, dass** nicht umgesetztes monomeres organisches Isocyanat aus der Reaktionsmischung abgetrennt wird.

**11.** Verwendung eines spirocyclischen Ammoniumsalzes mit einem Kation der Formel I,

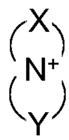

(Formel I),

wobei die N-ständigen Substituenten X und Y für gleiche oder verschiedene, substituierte oder unsubstituierte, ggf. durch Heteroatome (O, N, S) sowie aromatische Ringe unterbrochene $C_2$-$C_{20}$-Alkylenketten stehen, als Katalysatoren für die Oligomerisierung von monomeren organischen Isocyanaten mit einer NCO-Funktionalität > 1.

## Claims

**1.** Process for modifying isocyanates, in which at least one monomeric organic isocyanate having an NCO functionality > 1 is oligomerized in the presence of at least one catalyst,
**characterized in that**
the catalyst comprises at least one spirocyclic ammonium salt having a cation of the formula I as catalysts for the isocyanate modification.

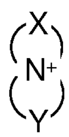

(Formula I)

where the nitrogen substituents X and Y are identical or different, substituted or unsubstituted C2-C20-alkylene chains optionally interrupted by heteroatoms (O, N, S) and aromatic rings.

**2.** Process according to Claim 1, **characterized in that** X and/or Y are each independently optionally substituted C4-C6-alkylene chains and are especially of linear structure.

**3.** Process according to Claim 1 or 2, **characterized in that** the anion of the spirocyclic ammonium salt is selected from hydroxide, alkanoate, carboxylate, heterocycles having at least one negatively charged nitrogen atom in the ring, especially azolate, imidazolate, triazolate or tetrazolate, fluoride, hydrogendifluoride and mixtures of these.

**4.** Process according to any of the preceding claims, **characterized in that** the oligomerization is conducted in the presence of a solvent and/or additive.

**5.** Process according to any of the preceding claims, **characterized in that** the monomeric organic isocyanate is selected from aliphatic diisocyanates, especially from hexamethylene diisocyanate (HDI), 2-methylpentane 1,5-diisocyanate, 2,4,4-trimethylhexane 1,6-diisocyanate, 2,2,4-trimethylhexane 1,6-diisocyanate, 4-isocyanatomethyloctane 1,8-diisocyanate, 3(4)-isocyanatomethyl-1-methylcyclohexyl isocyanate (IMCI), isophorone diisocyanate (IPDI), 1,3- and 1,4-bis(isocyanatomethyl)benzene (XDI), 1,3- and 1,4-bis(isocyanatomethyl)cyclohexane (H6XDI) and mixtures of these.

6. Process according to any of the preceding claims, **characterized in that** the catalyst of the formula I is used in an amount of 0.001 to 5 mol%, based on the sum total of the molar amounts of the monomeric organic isocyanate used and the catalyst, preferably 0.002 to 2 mol% of catalyst.

7. Process according to any of the preceding claims, **characterized in that** the process is conducted within the temperature range from 0°C to +250°C, preferably 20 to 180°C, more preferably 40 to 150°C.

8. Process according to any of the preceding claims, **characterized in that** the oligomerization is stopped after 5% to 80% by weight of the monomeric organic isocyanate used has been converted, preferably 10% to 60% by weight.

9. Process according to Claim 8, **characterized in that** the oligomerization is stopped by deactivating the catalyst, especially by adding an acid or an acid derivative such as benzoyl chloride, an acidic ester of phosphorus- or sulfur-containing acids, these acids themselves, adsorptively binding the catalyst and then removing it by filtration or combinations thereof.

10. Process according to Claim 8 or 9, **characterized in that** unconverted monomeric organic isocyanate is separated from the reaction mixture.

11. Use of a spirocyclic ammonium salt having a cation of the formula I

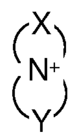

(Formula I)

where the nitrogen substituents X and Y are identical or different, substituted or unsubstituted C2-C20-alkylene chains optionally interrupted by heteroatoms (O, N, S) and aromatic rings, as catalysts for the oligomerization of monomeric organic isocyanates having an NCO functionality > 1.

## Revendications

1. Procédé de modification d'isocyanates, selon lequel au moins un isocyanate organique monomère ayant une fonctionnalité NCO > 1 est oligomérisé en présence d'au moins un catalyseur,
**caractérisé en ce que**
le catalyseur comprend au moins un sel d'ammonium spirocyclique contenant un cation de formule I en tant que catalyseurs pour la modification d'isocyanates,

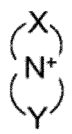

(Formule I)

dans laquelle les substituants N-terminaux X et Y représentent des chaînes alkylène en C2-C20 identiques ou différentes, substituées ou non substituées, éventuellement interrompues par des hétéroatomes (O, N, S), ainsi que des cycles aromatiques.

2. Procédé selon la revendication 1, **caractérisé en ce que** X et/ou Y représentent indépendamment l'un de l'autre des chaînes alkylène en C4-C6 éventuellement substituées et sont notamment de structure linéaire.

3. Procédé selon la revendication 1 ou 2, **caractérisé en ce que** l'anion du sel d'ammonium spirocyclique est choisi

parmi un hydroxyde, un alcanoate, un carboxylate, les hétérocycles contenant au moins un atome d'azote chargé négativement dans le cycle, notamment un azolate, un imidazolate, un triazolate ou un tétrazolate, un fluorure, un hydrogénodifluorure ou des mélanges de ceux-ci.

**4.** Procédé selon l'une quelconque des revendications précédentes, **caractérisé en ce que** l'oligomérisation est réalisée en présence d'un solvant et/ou d'un additif.

**5.** Procédé selon l'une quelconque des revendications précédentes, **caractérisé en ce que** l'isocyanate organique monomère est choisi parmi les diisocyanates aliphatiques, notamment parmi le diisocyanate d'hexaméthylène (HDI), le 1,5-diisocyanate de 2-méthylpentane, le diisocyanate de 2,4,4-triméthyl-1,6-hexane, le diisocyanate de 2,2,4-triméthyl-1,6-hexane, le diisocyanate de 4-isocyanatométhyl-1,8-octane, l'isocyanate de 3(4)-isocyanatométhyl-1-méthylcyclohexyle (IMDI), le diisocyanate d'isophorone (IPDI), le 1,3- et le 1,4-bis(isocyanatométhyl)benzène (XDI), le 1,3- et le 1,4-bis(isocyanatométhyl)cyclohexane (H6XDI) ou les mélanges de ceux-ci.

**6.** Procédé selon l'une quelconque des revendications précédentes, **caractérisé en ce que** le catalyseur de formule I est utilisé en une quantité de 0,001 à 5 % en moles, par rapport à la somme des quantités de matière de l'isocyanate organique monomère utilisé et du catalyseur, de préférence de 0,002 à 2 % en moles de catalyseur.

**7.** Procédé selon l'une quelconque des revendications précédentes, **caractérisé en ce que** le procédé est réalisé dans la plage de température allant de 0 °C à +250 °C, de préférence de 20 à 180 °C, de manière particulièrement préférée de 40 à 150 °C.

**8.** Procédé selon l'une quelconque des revendications précédentes, **caractérisé en ce que** l'oligomérisation est interrompue après la transformation de 5 à 80 % en poids de l'isocyanate organique monomère utilisé, de préférence 10 à 60 % en poids.

**9.** Procédé selon la revendication 8, **caractérisé en ce que** l'oligomérisation est interrompue par désactivation du catalyseur, notamment par ajout d'un acide ou d'un dérivé d'acide, tel que le chlorure de benzoyle, d'un ester acide d'acides contenant du phosphore ou du soufre, de ces acides eux-mêmes, liaison par adsorption du catalyseur, puis séparation par filtration ou leurs combinaisons.

**10.** Procédé selon la revendication 8 ou 9, **caractérisé en ce que** l'isocyanate organique monomère non réagi est séparé du mélange réactionnel.

**11.** Utilisation d'un sel d'ammonium spirocyclique contenant un cation de formule I

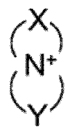

(Formule I)

dans laquelle les substituants N-terminaux X et Y représentent des chaînes alkylène en $C_2$-$C_{20}$ identiques ou différentes, substituées ou non substituées, éventuellement interrompues par des hétéroatomes (O, N, S), ainsi que des cycles aromatiques, en tant que catalyseurs pour l'oligomérisation d'isocyanates organiques monomères ayant une fonctionnalité NCO > 1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 962455 A1
- EP 962454 A1
- EP 896009 A1
- EP 798299 A1
- EP 447074 A1
- EP 379914 A1
- EP 339396 A1
- EP 315692 A1
- EP 295926 A1
- EP 235388 A1
- EP 2415795 A1
- US 20070049750 A
- US 20070049750 A1
- EP 896009 A


### In der Beschreibung aufgeführte Nicht-Patentliteratur


- **H. J. LAAS et al.** *J. Prakt. Chem.,* 1994, vol. 336, 185 ff
- *Chem. Eur. J.,* 2009, vol. 15, 5200-5202
- **D. WENDISCH, H. REIFF ; D. DIETERICH.** *Die Angewandte Makromolekulare Chemie,* 1986, vol. 141, 173-183